# EUROPÄISCHE PATENTSCHRIFT

(11) **EP 0 373 311 B1**
(45) Veröffentlichungstag und Bekanntmachung des Hinweises auf die Patenterteilung: **12.07.1995**
(21) Anmeldenummer: 89118542.3
(22) Anmeldetag: 06.10.1989
(51) Int. Cl.: G01N 1/28, G01N 30/00, G01N 21/72

(54) **Anordnung zur Anreicherung von Probensubstanz für spektroskopische Zwecke**
Device for the enrichment of sample materials for spectroscopic purposes
Système pour l'enrichissement d'échantillons à des fins spectroscopiques

(30) Priorität: 16.12.1988 DE 3842315
(43) Veröffentlichungstag der Anmeldung: 20.06.1990
(73) Patentinhaber: BODENSEEWERK PERKIN-ELMER GMBH, D-88662 Überlingen (DE)
(72) Erfinder: Fang, Zhaolun, Prof. Institute of, Shenyang (CN)
(74) Vertreter: Schumann, Klaus, Dr. rer. nat.

(56) Entgegenhaltungen:
- EP-A- 0 092 860
- US-A- 4 341 635
- ANALYTICAL CHEMISTRY, Band 57, Nr. 1, Januar 1985, Seiten 21-25, AmericanChemical Society, Columbus, Ohio, US; S.D. HARTENSTEIN et al.: "Sensitivityenhancements for flow injection analysis-inductivity coupled plasma atomicemission spectrometry using an on-line preconcentrating ion-exchange column"
- TRENDS IN ANALYTICAL CHEMISTRY, Band 6, Nr. 5, 1987, Seiten 134-138, Elsevier,NL; H.M. RUIJTEN et al.: "The use of conical precolumns in chromatographicanalysis"
- JOURNAL OF ANALYTICAL ATOMIC SPECTROMETRY, Band 4, August 1989, Seiten 543-546;Z. FANG et al.: "High efficiency low sample consumption on-line ion-exchangepre-concentration system for flow injection flame atomic absorptionspectrometry"

## Beschreibung

Die Erfindung betrifft eine Anordnung zur Anreicherung von Probensubstanz für spektroskopische Zwecke bei der Fließinjektions - Analyse, enthaltend
(a) erste Pumpmittel zum Fördern einer Proben- und einer Pufferflüssigkeit,
(b) zweite Pumpmittel zum Fördern einer eluierendenden Flüssigkeit,
(c) eine Ionenaustauschersäule, durch welche die zu bestimmenden Elemente zurückgehalten werden und aus welcher die zu bestimmenden Elemente von der eluierenden Flüssigkeit eluierbar sind, mit einem ersten Ende und einem zweiten Ende,
(d) Ventilmittel, durch welche in einer ersten Ventilstellung das erste Ende der Ionenaustauschersäule mit den ersten Pumpmitteln und das zweite Ende der Ionenaustauschersäule mit einem Abfallauslaß und in einer zweiten Ventilstellung das zweite Ende der Ionenaustauschersäule mit den zweiten Pumpmitteln und das erste Ende mit einem spektroskopischen Analysengerät verbindbar ist.

Das spektroskopische Analysengerät kann dabei ein Atomabsorptions - Spektrometer sein, wobei das Eluat aus der Ionenaustauschersäule in eine Flamme versprüht wird. Die Flamme ist im Strahlengang eines Meßlichtbündels des Atomabsorptions - Spektrometers angeordnet. Das Analysengerät kann auch ein mit elektrothermischer Atomisierung arbeitendes Atomabsorptions - Spektrometer sein. Das spektroskopische Analysengerät kann schließlich auch ein Atomemissions - Spektrometer mit einem Plasmabrenner sein. Bei einem solchen Atomemissions - Spektrometer wird in einem Edelgasstrom durch ein Hochfrequenzfeld ein Plasma von hoher Temperatur erzeugt. In dieses Plasma wird eine Probenflüssigkeit angesaugt. Die Probenflüssigkeit wird in dem Plasma atomisiert. Die Atome werden zur Emission von Strahlung angeregt. Durch einen Polychromator können dabei gleichzeitig mehrere Elemente in der Probe bestimmt werden. Durch die Anreicherung zu bestimmenden Elemente in der Ionenaustauschersäule und anschließende Zufuhr des Eluats zu dem Analysengerät wird die Empfindlichkeit der Messung erhöht.

### Zugrundeliegender Stand der Technik

Aus einem Aufsatz von Olsen et. al in der Zeitschrift "The Analyst", Bd. 108,905-917 ist eine Anordnung zur Anreicherung von Probensubstanz für spektroskopische Zwecke bei der Fließinjektions - Analyse bekannt. Eine Schlauchpumpe fördert in parallelen Schlauchleitungen Wasser, eine Pufferflüssigkeit in Form von Ammoniumacetat und eine eluierende Flüssigkeit in Form von Salpetersäure.

In der Schlauchleitung, in welche das Wasser gefördert wird, ist ein Injektionsventil angeordnet. Das Injektionsventil enthält einen Durchgangskanal und eine Probenschleife, die wahlweise in die Strömung in der Schlauchleitung einschaltbar sind. Wenn der Durchgangskanal in die Schlauchleitung eingeschaltet ist, wird durch die Probenschleife eine Strömung von Probenflüssigkeit geleitet, so daß die Probenschleife mit Probenflüssigkeit gefüllt wird. Nach Umschalten des Injektionsventils wird die mit Probenflüssigkeit gefüllte Probenschleife in die die Wasserströmung führende Schlauchleitung eingeschaltet, so daß die Probenflüssigkeit von der Wasserströmung mitgenommen wird. Das Wasser bzw. die Probenflüssigkeit werden mit der Pufferflüssigkeit gemischt und strömen bei einer ersten Ventilstellung einer Ventilanordnung durch eine Ionenaustauschersäule, und zwar von einem ersten Ende der Ionenaustauschersäule zu einem zweiten Ende. Das zweite Ende ist mit einem Abfallauslaß verbunden. Die eluierende Flüssigkeit strömt bei der ersten Ventilstellung der Ventilanordnung zu einem Zerstäuber und wird in die Flamme eines Atomabsorptions- Spektrometers versprüht. Es erfolgt jetzt eine Anreicherung der Probe in der Ionenaustauschersäule. Anschließend wird die Ventilanordnung in eine zweite Ventilstellung umgeschaltet. In dieser zweiten Ventilstellung sind die Wasser- und die Ammoniumacetat - Schlauchleitung mit dem Abfallauslaß verbunden. Das zweite Ende der Ionenaustauschersäule ist mit der die eluierende Flüssigkeit führenden Schlauchleitung verbunden. Das erste Ende der Ionenaustauschersäule ist mit dem Zerstäuber des Atomabsorptions - Spektrometers verbunden. Die Ionenaustauschersäule wird von der eluierenden Flüssigkeit im Gegenstrom zu der vorherigen Strömungsrichtung durchflossen und eluiert die angereicherten zu bestimmenden Elemente in den Zerstäuber und damit in den Brenner des Atomabsorptions - Spektrometers.

Durch einen Aufsatz von Hartenstein et al In "Analytical Chemistry" 57 (1985), 21-25 und einen Aufsatz von Zhaolun Fang et al in "Analytica Chimica Acta" 200 (1987), 35-49 ist eine Anordnung bekannt, bei welcher durch eine erste Schlauchpumpe jeweis eine erste Probenflüssigkeit mit einer zugehörigen Pufferflüssigkeit und eine zweite Probenflüssigkeit mit einer zugehörigen Pufferflüssigkeit gefördert werden. In Rohrschlangen, die der Schlauchpumpe nachgeschaltet sind, werden die Probenflüssigkeiten mit den zugehörigen Pufferflüssigkeiten gemischt. Die so erhaltene Proben- und Pufferflüssigkeit wird auf ein erstes Ventil geleitet. In einer ersten Ventilstellung des ersten Ventils werden die Proben- und Pufferflüssigkeiten auf ein erstes Ende je einer zugehörigen Ionenaustauschersäule geleitet. Die anderen, zweiten Enden der Ionenaustauschersäulen sind jeweils mit einem Abfallauslaß verbunden. Die beiden Ionenaustauschersäulen werden dann parallel mit Probenflüssigkeit beladen, die Probe wird in den Säulen angereichert. Eine zweite Schlauchpumpe fördert eine eluierende Flüssigkeit und Wasser. Das Wasser wird in der ersten Stellung des Ventils auf den Zerstäuber eines Plasmabrenners geleitet. Die eluierende Flüssigkeit ist bei dieser ersten Stellung des Ventils mit einem Abfallauslaß verbunden. In der zweiten Stellung leitet das Ventil die eluierende Flüssigkeit auf das zweite Ende einer der Ionenaustauschersäulen, deren erstes Ende dann mit dem Zerstäuber verbunden wird. Durch ein Umschaltventil wird die jeweils von der eluierenden Flüssigkeit beaufschlagte Ionenaustauschersäule ausgewählt.

Durch die Verwendung von zwei Ionenaustauschersäulen, die parallel beladen werden, kann die Analysenzeit ungefähr halbiert werden. Statt der eluierenden Flüssigkeit wird während des Beladens der Ionenaustauschersäulen Wasser auf den Zerstäuber geleitet. Das Wasser spült den Zerstäuber und stabilisiert das Plasma.

Bei allen bekannten Anordnungen der vorliegenden Art haben die Ionenaustauschersäulen im wesentlichen über ihre gesamte Länge hinweg konstanten Querschnitt. Die Ionenaustauschersäulen nach dem Aufsatz von Zhaolun Fang et al in "Analytica Chimica Acta" 200 (1987), 35-49 hat beidseitig konisch sich verjüngende Enden. Die Säule ist somit an den Enden symmetrisch ausgebildet. Das soll eine gleichmäßige Strömung gewährleisten. Der wesentliche Teil der Ionenaustauschersäule, in welchem die Probe angereichert wird, ist jedoch zylindrisch.

Um eine hohe Anreicherung der Probe in der Ionenaustauschersäule zu erreichen, ist bei den bekannten Anordnungen eine relativ lange Anreicherungszeit erforderlich. Das führt zu Totzeiten des Spektrometers und bei Verwendung eines Plasmabrenners zu unzulässig hohem Verbrauch an Edelgas. Eine Verringerung der Analysenfrequenz bringt Schwierigkeiten mit sich mit der Eichung bei Routineanwendungen. Es treten nämlich durch die Erhöhung der Versuchsdauer erhöhte Driften der Versuchsbedingungen auf, die durch häufigere Eichvorgänge berücksichtigt werden müssen. Das verringert jedoch die Effizienz der Methode noch weiter. Ein weiteres Problem ist dabei die Dispersion des eluierten Probenpfropfes, welche einer Erhöhung der Empfindlichkeit entgegenwirkt und damit längere Anreicherungszeiten erforderlich macht.

Aus "Trends in Analytical Chemistry", Bd. 6 (1987), 134 bis 138 sind konische Vorsäulen bei der chromatographischen Analyse bekannt. Hierdurch soll eine Vorkonzentration der Probe erfolgen. Die Verwendung konischer Vorsäulen hat dabei gegenüber zylindrischen Vorsäulen den Vorteil einer grösseren Kapazität. Eine ähnliche Anordnung ist in EP-A-92 860 offenbart, wobei dort auch auf die Möglichkeit der Detektion durch UV-Spektroskopie im Anschluß an die Trennsäule hingewiesen wird. Der Vorsäule wird die Probe zum Beladen mittels einer Spritze oder einer Pumpe zugeführt. In beiden letztgenannten Dokumenten erfolgt das Beladen der Vorsäule und das Eluieren aus der Vorsäule vom gleichen, und zwar vom Breiteren Ende der Vorsäule her.

Ein Aufsatz von H. Prugger und O. Kling "Anreicherung von Spurenelementen zur Atomabsorptionsspektralanalyse" in "Zeitschrift für Werkstofftechnik" (1970) , 142 bis 148 beschreibt unter anderem die Abtrennung von Metallen durch Ionenaustauscher.

Die veröffentlichte deutsche Patentanmeldung B 903 beschreibt einen konischen Filterbehälter, der auch als Ionenaustauschfilter ausgebildet sein kann. Dadurch soll das Rückspülen des Filters erleichtert werden.

Die De-A-28 08 344 betrifft ein Verfahren zum Entfernen wenigstens einer molekularen Spezies aus einer Probe mittels einer Membran und eines elektrischen Feldes.

### Offenbarung der Erfindung

Der Erfindung liegt die Aufgabe zugrunde, bei spektroskopischen Analysen die Empfindlichkeit der Messung zu erhöhen, ohne daß dabei der Zeitaufwand für eine einzelne Analyse unzulässig hoch wird.

Der Erfindung liegt speziell die Aufgabe zugrunde, bei einer Anordnung der eingangs definierten Art zur Anreicherung von Probensubstanz für spektroskopische Zwecke bei der Fließinjektions - Analyse der Dispersion des eluierten Probenpfropfes entgegenzuwirken.

Erfindungsgemäß wird diese Aufgabe durch die Merkmale des Anspruchs 1 gelöst.

Durch eine solche Ausbildung der Ionenaustauschersäule wird bei dem Beladen der Ionenaustauschersäule, das von dem schmaleren, ersten Ende der Ionenaustauschersäule her erfolgt, die Probe im Bereich dieses schmaleren ersten Endes, also in der "Spitze" der Ionenaustauschersäule in einem Bereich von geringem Durchmesser angelagert. Aus diesem Bereich wird die Probe dann von der eluierenden Flüssigkeit in sehr kurzer Zeit eluiert. Es tritt daher aus der Ionenaustauschersäule ein Probenpfropf hoher Konzentration aber kurzer Dauer aus. Das Spektrometer liefert dementsprechend einen hohen aber sehr kurzen Ausgangsimpuls. Damit läßt sich eine hohe Empfindlichkeit erreichen, die durch die Höhe des Impulses bestimmt ist, ohne daß die angereicherte Menge an Probe, die der Fläche des Impulses analog ist, groß und damit die Anreicherungszeit unerwünscht lang zu sein braucht. Es hat sich gezeigt, daß mit einer Ionenaustauschersäule nach der Erfindung eine im Vergleich zum Stand der Technik hohe Empfindlichkeit bei hoher Analysenfrequenz erreichbar ist.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

### Kurze Beschreibung der Zeichnungen

- Fig.1: zeigt ein Schaltbild einer Anordnung zur Anreicherung von Probe für spektroskopische Zwecke mittels einer Ionenaustauschersäule bei Fließinjektions - Analyse in der Betriebsweise "Anreicherung".
- Fig.2: zeigt einen Teil der Anordnung von Fig.1 in der Betriebsweise "Messung".
- Fig.3: veranschaulicht den Zeitablauf eines Meßzyklus bei der Anordnung von Fig.1 und 2.
- Fig.4: zeigt einen Längsschnitt einer Ionenaustauschersäule bei der Anordnung von Fig.1.
- Fig.5: zeigt die Signale, die bei wiederholten Messungen mit einer Anordnung nach Fig.1 erhalten wurden.

### Bevorzugte Ausführung der Erfindung

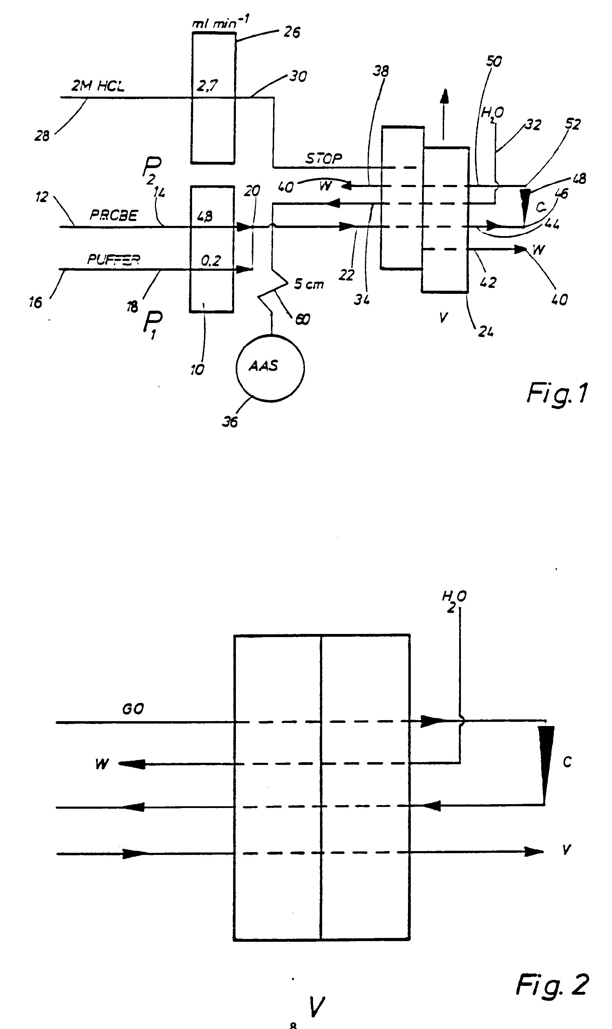

In Fig.1 ist mit 10 eine erste Schlauchpumpe bezeichnet. Die Schlauchpumpe 10 fördert eine Probenflüssigkeit, die über einen Anschluß 12 und eine Schlauchleitung 14 zugeführt wird. Die Schlauchpumpe 10 fördert weiterhin eine Pufferflüssigkeit, die über einen Anschluß 16 und eine Schlauchleitung 18 zugeführt wird. Die beiden Schlauchleitungen 14 und 18 sind in einem Verzweigungspunkt 20 zusammengeführt. Von dem Verzweigungspunkt 20 geht eine gemeinsame Leitung 22 zu einem Ventil 24.

Eine zweite Schlauchpumpe 26 fördert eine eluierende Flüssigkeit, beispielsweise 2-molare Salzsäure. Die eluierende Flüssigkeit wird über einen Anschluß 28 und eine Schlauchleitung 30 zugeführt. Die Schlauchleitung 30 ist ebenfalls mit dem Ventil 24 verbunden.

Weiterhin ist mit dem Ventil 24 eine Leitung 32 verbunden, über welche de-ionisiertes Wasser zugeführt wird.

Ein Anschluß 34 des Ventils 24 ist mit dem Zerstäuber eines Brenners 36 eines Atomabsorptions - Spektrometers verbunden, was in Fig.1 nur schematisch dargestellt ist. Ein weiterer Anschluß 38 des Ventils ist mit einem Abfallauslaß 40 verbunden. Ebenfalls mit dem Abfallauslaß 40 verbunden ist ein Anschluß 42 des Ventils 24. Ein Anschluß 44 des Ventils 24 ist mit einem ersten Ende 46 einer Ionenaustauschersäule 48 verbunden. Ein Anschluß 50 des Ventils 24 ist mit einem zweiten Ende 52 der Ionenaustauschersäule 48 verbunden.

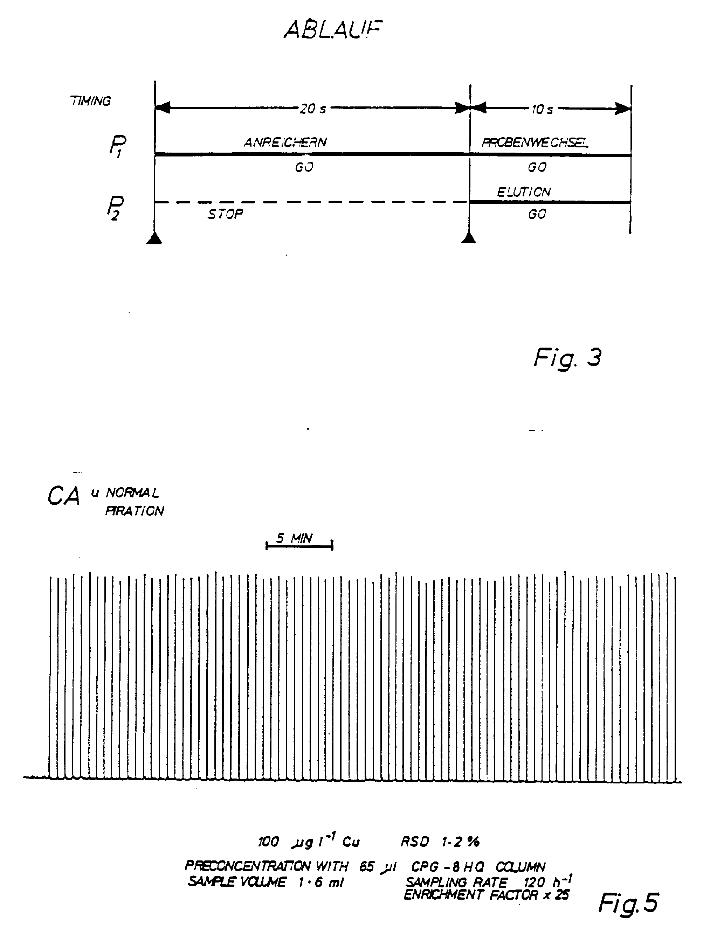

In der in Fig.1 dargestellten ersten Ventilstellung des Ventils 24 ist die gemeinsame Leitung 22 über das Ventil 24 und dessen Anschluß 44 mit dem ersten Ende 46 der Ionenaustauschersäule 48 verbunden. Das zweite Ende 52 der Ionenaustauschersäule 48 ist über den Anschluß 50 des Ventils 24, das Ventil 24 und den Anschluß 38 mit dem Abfallauslaß 40 verbunden. Die erste Pumpe 10 ist eingeschaltet ( Fig.3) und die zweite Pumpe 26 steht still. Es wird also keine eluierende Flüssigkeit gefördert. Über Leitung 32, das Ventil 24 und Anschluß 34 wird de-ionisiertes Wasser auf den Zerstäuber des Brenners 36 gegeben. Dadurch wird der Zerstäuber gespült.

Bei dieser Ventilstellung, die der Betriebsweise "Anreicherung" entspricht, fließt Proben- und Pufferflüssikeit von dem ersten Ende 46 zu dem zweiten Ende 52 durch die Ionenaustauschersäule 48. Dadurch werden die zu bestimmenden Elemente der Ionenaustauschersäule zurückgehalten und angereichert.

Nach einer Zeitspanne von beispielsweise 20 Sekunden (Fig.3) wird die zweite Pumpe 26 eingeschaltet. Gleichzeitig wird das Ventil 24 in seine zweite Ventilstellung umgeschaltet. In der zweiten Ventilstellung des Ventils 24, die in Fig .2 dargestellt ist, ist die Leitung 22 über das Ventil 24 und Anschluß 42 mit dem Abfallauslaß 40 verbunden. Die Schlauchpumpe 10 saugt dann eine neue Probe an und verdrängt dabei die vorherige, mit dem in der Ionenaustauschersäule angereicherten zu bestimmenden Elementen, aus der Leitung 22 und dem Ventil 24. Die zweite Pumpe 26 fördert eluierende Flüssigkeit über die Schlauchleitung 30, das Ventil 24 und Anschluß 50 zu dem ersten Ende 52 der Ionenaustauschersäule 48. Das zweite Ende 46 der Ionenaustauschersäule 48 ist über das Ventil 24 und Anschluß 22 mit dem Zerstäuber des Brenners 36 verbunden.

Die zweite Pumpe 26 drückt also eluierende Flüssigkeit von dem zweiten Ende 52 her durch die Ionenaustauschersäule 48 zu dem ersten Ende 46. Dabei werden die in der Ionenaustauschersäule angereicherten, zu bestimmenden Elemente eluiert. Das Eluat wird von der eluierenden Flüssigkeit in den Zerstäuber des Brenners 36 transportiert. Die Ionenaustauschersäule 48 hat dabei die Funktion der üblichen Probenschleife bei der Fließinjektions - Analyse. Darüberhinaus bewirkt aber die Ionenaustauschersäule 48 eine Anreicherung der Probe.

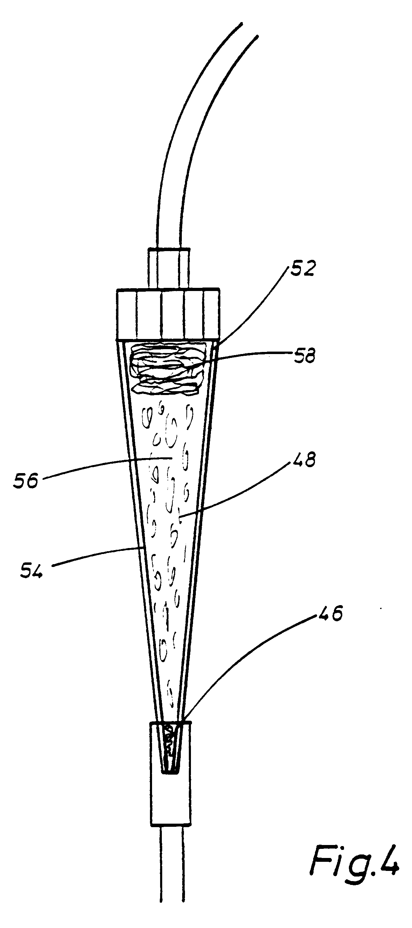

Die Ionenaustauschersäule 48 verjüngt sich, wie schon in Fig.1 angedeutet und in Fig.4 im einzelnen dargestellt ist, von dem zweiten Ende 52 zu dem ersten Ende 46 hin. Bei der dargestellten bevorzugten Ausführungsform enthält die Ionenaustauschersäule 48 einen konischen Trichter 54. Dieser Trichter 54 ist eine übliche Eppendorf - Pipettenspitze aus Kunststoff, die an ihrem spitzen, ersten Ende 46 abgeschnitten ist, so daß sich dort ein Auslaß von ungefähr 0,5 mm Innendurchmesser ergibt. Dieser Trichter 54 ist dicht mit einem körnigen Ionenaustauscher 56 gepackt. Der Ionenaustauscher ist 8 - Chinolinol, azoimmobilisiert an porösem Glas mit definierter Porenweite mit einer Teilchengröße von 125 - 177 »m und einem Porendurchmesser von 500 nm. Ein solcher Ionenaustauscher wird von der Pierce Chemical Company unter der Bezeichnung CPG/8-Q geliefert. Die trichterförmige Form der Ionenaustauschersäule gestattet es, den Ionenaustauscher 56 sehr dicht zu packen. Der Ionenaustauscher 56 wird durch Glaswolle 58 von dem zweiten Ende 52 her zusammengehalten.

Das Ventil 26 ist durch die kürzestmögliche Länge von PTFE-Leitung 60 mit dem Zerstäuber verbunden. Die PTFE-Leitung 60 hat eine Länge von 5 cm und einen Innendurchmesser von 0,5 mm.

Wie aus Fig.3 ersichtlich ist, ist das Gerät programmiert für eine Anreicherungszeit von 20 Sekunden und eine Elutionszeit von 10 Sekunden. Es ergeben sich damit 120 Analysen pro Stunde. Die Strömungsrate der Probenflüssigkeit für die Anreicherung beträgt 4,8 ml/min. Die Pufferflüssigkeit ist eine Ammoniumacetatlösung mit einem pH-Wert von 9. Die Pufferflüssigkeit wird mit einer Strömungsrate von 0,2 ml/min zugeführt. Sie wird mit der sauren Probenflüssigkeit mit einem pH-Wert von 3 in dem Verzweigungspunkt 20 vermischt. Als Strömungsrate für die eluierende Flüssigkeit, entgaste 2-molare Salzsäure, hat sich ein Wert von 2,7 ml/min als optimal erwiesen. Das Eluat wird auf einen Zerstäuber mit einer Ansaugrate von 10 ml/min gegeben.

Fig.5 zeigt Signale, die bei wiederholten Messungen ein und derselben Probenflüssigkeit mit einer Anordnung nach Fig.1 bis 3 erhalten wurden. Die Probenflüssigkeit war eine Kupferlösung mit einer Konzentration von 100 »g/l Cu. Eine Anreicherung erfolgte mit einer Ionenaustauschersäule der oben geschilderten Art mit einem Volumen von 65 »l. Das Probenvolumen betrug 1,6 ml. Die Analysenfrequenz betrug 120 Messungen pro Stunde. Der Anreicherungsfaktor war 25. Dabei erdab sich eine mittlere Abweichung (RSD) der Messungen von 1,2%.

Die beschriebene Anordnung stellt ein System dar, das die große Empfindlichkeitslücke von 2-3 Größenordnungen zwischen der Flammen - AAS und der Atomabsorptions - Spektroskopie mit Graphitofen überbrückt. Es ergibt sich eine 20-30-fache Signalvergrößerung gegenüber der üblichen Flammen - AAS aber ähnliche Analysenfrequenz und gleicher Probenverbrauch wie bei dieser.

## Patentansprüche

1. Anordnung zur Anreicherung von Probensubstanz für spektroskopische Zwecke bei der Fließinjektions - Analyse, enthaltend
(a) erste Pumpmittel (10) zum Fördern einer Proben- und einer Pufferflüssigkeit,
(b) zweite Pumpmittel (26) zum Fördern einer. eluierenden Flüssigkeit,
(c) eine Ionenaustauschersäule (48), durch welche die zu bestimmenden Elemente zurückgehalten werden und aus welcher die zu bestimmenden Elemente von der eluierenden Flüssigkeit eluierbar sind mit einem ersten Ende (46) und einem zweiten Ende (52),
(d) Ventilmittel (24), durch welche
- in einer ersten Ventilstellung das erste Ende (46) der Ionenaustauschersäule (48) mit den ersten Pumpmitteln (10) verbunden ist und das zweite Ende (52) der Ionenaustauschersäule (48) mit einem Abfallauslaß (40) verbindbar ist und
- in einer zweiten Ventilstellung das zweite Ende (52) der Ionenaustauschersäule (48) mit den zweiten Pumpmitteln (26) verbunden ist und das erste Ende (46) mit einem spektroskopischen Analysengerät (36) verbindbar ist,
**dadurch gekennzeichnet, daß**
(e) die Ionenaustauschersäule (48) sich vom zweiten Ende (52) zum ersten Ende (46) hin verjüngt, so daß sie am ersten Ende, von dem her die Beladung mit der Probe erfolgt, einen geringeren Durchmesser aufweist als am zweiten Ende, von dem her die eluierende Flüssigkeit einströmt.

2. Anordnung nach Anspruch 1, **dadurch gekennzeichnet, daß** ein Anschluß (32) für eine neutrale Spülflüssigkeit durch die Ventilmittel (24) in der ersten Ventilstellung mit dem spektroskopischen Analysengerät (36) und in der zweiten Ventilstellung mit dem Abfallanschluß (40) verbindbar ist.

3. Anordnung nach Anspruch 1 oder 2, **dadurch gekennzeichnet, daß** die Ionenaustauschersäule (48) sich zu dem ersten Ende (46) hin konisch verjüngt.

4. Anordnung nach Anspruch 3, **dadurch gekennzeichnet, daß** die Ionenaustauschersäule (46) als Ionenaustauscher (56) ein dicht gepacktes körniges Material enthält, das durch Glaswolle (58) von dem zweiten Ende (52) her zusammengehalten wird.

5. Anordnung nach einem der Ansprüche 1 bis 4, **dadurch gekennzeichnet, daß** die ersten Pumpmittel (10) während des gesamten Analysenzyklus in Betrieb sind und die zweiten Pumpmittel (26) während eines ersten Abschnitts des Analysencyklus, wenn die Ventilmittel (24) in ihrer ersten Ventilstellung sind, ausgeschaltet bleiben und nur während des restlichen Abschnitts i Betrieb sind, in welchem die Ventilmittel (24) in ihrer zweiten Ventilstellung sind.

## Claims

1. An arrangement for concentrating a sample substance for spectroscopic purposes during flow injection analysis, the arrangement containing
a) first pump means (10) for conveying a sample liquid and a buffer liquid,
b) second pump means (26) for conveying an eluting liquid,
c) an ion exchange column (48) through which the elements for determination are retained and from which the elements for analysis can be eluted by the eluting liquid, the column having a first end (46) and a second end (52), and
d) valve means (24) through which
- in a first valve position, the first end (46) of the ion exchange column (48) is connected to the first pump means (10) and the second end (52) of the ion exchange column (48) can be connected to a waste outlet (40), and,
- in a second valve position, the second end (52) of the ion exchange column (48) is connected to the second pump means (26) and the first end (46) can be connected to a spectroscopic analytical device (36),
characterised in that
e) the ion exchange column (48) tapers from the second end (52) to the first end (46), so that at the first end, at which the sample is loaded, it has a smaller diameter than at the second end, from which the eluting liquid flows.

2. An arrangement according to claim 1, characterised in that a connection (32) for a neutral washing liquid can be connected to the spectroscopic analytical device (36) through the valve means (24) when in the first valve position and to the waste connection (40) when the valve means are in the second position.

3. An arrangement according to claim 1 or 2, characterised in that the ion exchange column (48) tapers conically towards the first end (46).

4. An arrangement according to claim 3, characterised in that the ion exchange column (46) contains an ion exchanger (56) in the form of a tightly packed granular material held together by glass wool (58) from the second end (52).

5. An arrangement according to any of claims 1 to 4, characterised in that the first pump means (10) are in operation during the entire analysis cycle and the second pump means (26) are switched off during a first part of the analysis cycle, when the valve means (24) are in the first position, and are in operation only during the remaining part, during which the valve means (24) are in the second position.

## Revendications

1. Appareillage pour enrichir une substance échantillon à des fins spectroscopiques dans l'analyse à écoulement-injection, comprenant
a) des premiers moyens de pompage (10) pour débiter un liquide échantillon et un liquide tampon,
b) des seconds moyens de pompage (26) pour débiter un liquide éluant,
c) une colonne échangeuse d'ions (48) par laquelle sont retenus les éléments à doser et d'où les éléments à doser sont éluables par le liquide éluant, colonne qui présente une première extrémité (46) et une seconde extrémité (52) et
d) des moyens de distribution (24) par lesquels
- à une première position de distribution, la première extrémité (46) de la colonne échangeuse d'ions (48) est reliée aux premiers moyens de pompage (10) et la seconde extrémité (52) de la colonne échangeuse d'ions (48) peut être reliée à une sortie de résidus (40) et
- à une seconde position de distribution, la seconde extrémité (52) de la colonne échangeuse d'ions (48) est reliée aux seconds moyens de pompage (26) et la première extrémité (46) peut être reliée à un appareil d'analyse spectroscopique (36),
caractérisé en ce que
e) la colonne échangeuse d'ions (48) se rétrécit à partir de la seconde extrémité (52) vers la première extrémité (46), de sorte qu'elle présente un plus faible diamètre à la première extrémité, depuis laquelle s'effectue le chargement en échantillon, qu'à la seconde extrémité, par laquelle pénètre le liquide éluant.

2. Appareillage selon la revendication 1, caractérisé en ce qu'un raccord (32) pour un liquide de lavage neutre peut être relié par les moyens de distribution (24) à l'appareil d'analyse spectroscopique (36) à la première position de distribution et au raccord de résidus (40) à la seconde position de distribution.

3. Appareillage selon la revendication 1 ou 2, caractérisé en ce que la colonne échangeuse d'ions (48) se rétrécit coniquement vers la première extrémité (46).

4. Appareillage selon la revendication 3, caractérisé en ce que la colonne échangeuse d'ions (46) contient, en tant que matériau échangeur d'ions (56), un matériau grenu formant un remplissage dense et qui est maintenu comprimé à partir de la seconde extrémité (52) par de la laine de verre (58).

5. Appareillage selon une des revendications 1 à 4, caractérisé en ce que les premiers moyens de pompage (10) sont en service pendant tout le cycle d'analyse et les seconds moyens de pompage (26) restent à l'arrêt pendant une première partie du cycle d'analyse, alors que les moyens de distribution (24) occupent leur première position de distribution, et sont seulement en service pendant la partie restante du cycle, au cours de laquelle les moyens de distribution (24) occupent leur seconde position de distribution.
